# EUROPÄISCHE PATENTSCHRIFT

(11) **EP 1 871 646 B1**
(45) Veröffentlichungstag und Bekanntmachung des Hinweises auf die Patenterteilung: **08.06.2011**
(21) Anmeldenummer: 06724233.9
(22) Anmeldetag: 11.04.2006
(51) Int. Cl.: B60R 21/34

(54) **KRAFTWAGENBUG**
MOTOR VEHICLE FRONT PART
PARTIE AVANT DE VEHICULE AUTOMOBILE

(30) Priorität: 16.04.2005 DE 102005017567
(43) Veröffentlichungstag der Anmeldung: 02.01.2008
(73) Patentinhaber: Daimler AG, 70327 Stuttgart (DE)
(72) Erfinder: RATHJE, Klaus, 71157 Hildrizhausen (DE); WALDHERR, Dennis, 71296 Heimsheim (DE)
(74) Vertreter: JENSEN & SON
(86) Internationale Anmeldenummer: PCT/EP2006/003307
(87) Internationale Veröffentlichungsnummer: WO 2006/111299

(56) Entgegenhaltungen:
- EP-A- 1 118 530
- DE-A1- 10 324 514
- DE-A1- 19 911 832
- FR-A- 2 445 783
- US-A1- 2004 195 020

## Beschreibung

Die Erfindung betrifft einen Kraftwagenbug mit einer Stoßfängereinheit gemäß dem Oberbegriff des Patentanspruchs 1.

Moderne Kraftfahrzeuge, insbesondere Kraftwagen, werden mit ihrem Kraftwagenbug so ausgelegt, dass zumindest die durch Gesetze vorgeschriebenen Maßgaben hinsichtlich eines Fußgängeraufpralls eingehalten werden. Dazu werden eine Reihe von Tests durchgeführt, um das Verhalten von Fahrzeugen bei Unfällen mit Kindern oder Erwachsenen zu untersuchen.

Es ist eine Abstützung bei einem Kraftwagenbug bekannt, der die Stoßfängereinheit bei einem Fußgängeraufprall in einem unteren, dem Stoßfängerquerträger vorgelagerten Bereich versteift. Diese Abstützung ist der Fachwelt unter dem Begriff "lower stiffener" bekannt geworden. Durch eine derartige Abstützung wird verhindert, dass der Unterschenkel eines Fußgängers unter das Fahrzeug gezogen wird. Gleichzeitig erhält der Fußgänger einen Impuls, gezielt über die Motorhaube abzurollen.

Es gibt jedoch Kraftwagen, bei denen eine untere Abstützung bauartbedingt nicht untergebracht werden kann. So können Fahrzeuge, bei denen ein erhöhter Böschungswinkel gewünscht ist, beispielsweise Geländewagen, nicht mit einer unteren Abstützung ausgerüstet werden, da diese den Böschungswinkel reduzieren würde. Unter einem Böschungswinkel versteht der Fachmann im Allgemeinen den Winkel, der zwischen der Fahrbahn auf Höhe der Radmitte des Vorderrades und der Unterkante des Stoßfängereinheit aufgespannt ist. Bei Geländewagen ist der Böschungswinkel meist größer als 25°.

Aus der DE 103 24 514 A1 geht ein Kraftfahrzeugbug hervor, bei dem oberhalb eines Stoßfängerquerträgers eine im Crashfall Energie absorbierende Befestigungsanordnung für den Stoßfänger vorgesehen ist. Diese ist derart gestaltet, dass sie nach einem Anprall eines Fußgängers gezielt nachgibt, um die auf den Fußgänger wirkenden Kräfte zu reduzieren.

Die Aufgabe der Erfindung besteht darin, einen Kraftwagenbug mit einer Stoßfängereinheit derart weiterzuentwickeln, dass der Fußgängerschutz auch bei Fahrzeugen verbessert ist, bei denen bauartbedingt keine untere Abstützung untergebracht werden kann.

Zur Lösung der Aufgabe wird ein Kraftfahrzeugbug mit den Merkmalen des Anspruchs 1 vorgeschlagen. Dieser ist mit einer Stoßfängereinheit versehen, die einen Stoßfängerquerträger umfasst. Weiterhin ist eine oberhalb des Stoßfängerquerträgers angeordnete Abstützung vorgesehen, die die Stoßfängereinheit bei einem Fußgängeranprall versteift. Die Abstützung versteift die Stoßfängereinheit bei einem Fußgängeranprall in einem dem Stoßfängerquerträger vorgelagerten Bereich unter Bildung eines weiteren Lastpfades und zwar derart, dass beim Zustandekommen eines Kontakts zwischen einem Oberschenkel des anprallenden Fußgängers und der oberen Abstützung im weiteren Verlauf des Anpralls eine Abweisbewegung des Oberschenkels in Fahrtrichtung erfolgt. Die Abstützung ist durch Zusammenwirken eines Kühlergitters mit einem Anschlagmittel gebildet, um eine Auslenkung des Kühlergitters entgegen der Fahrtrichtung zu verhindern. Die obere Abstützung verhindert ein zu starkes Eindrehen des Oberschenkels unter die Motorhaube, so dass der Biegewinkel zwischen Ober- und Unterschenkel klein gehalten werden kann. Dadurch wird im Falle eines Fußgängeraufpralls eine frühzeitige Abstützung des Oberschenkels erreicht. Im Falle eines Fußgängeraufpralls, der mittels eines Beinimpaktors simuliert wird, kollidiert der Beinimpaktor zunächst mit einem dem Stoßfängerquerträger vorgelagerten Energieabsorptionselement, um im weiteren Verlauf durch die obere Abstützung das weitere Eindrehen des Oberschenkels zu verhindern. Mit der oberen Abstützung wird ein zweiter Lastpfad aufgebaut, der sich im Wesentlichen oberhalb der Stoßfängereinheit befindet. Zur Sicherstellung der frühzeitigen oberen Abstützung können bereits bestehende Komponenten, wie beispielsweise die Kühlerquerbrücke oder der ART-Träger, nach vorn verlängert werden. Alternativ können Zusatzelemente vorgesehen werden, die sich an Tragstrukturen oder an der Motorhaube des Kraftwagenbugs abstützen.

Vorteilhafte Ausgestaltungen der Erfindung werden im Folgenden anhand der Zeichnung aufgezeigt. Dabei zeigen:
- Fig. 1: eine schematische Darstellung eines Längsschnitts durch einen Kraftwagenbug mit einer oberen Abstützung,
- Fig. 2: einen Längsschnitt gemäß Fig. 1 im weiteren Verlauf eines Fußgängeraufpralls,
- Fig. 3: eine schematische Darstellung eines Längsschnitts durch einen Kraftwagenbug mit einem motorhaubenfesten Kühlergitter,
- Fig. 4: eine schematische Frontansicht eines Kraftwagenbugs mit einem motorhaubenfesten Kühlergitter gemäß Fig. 3,
- Fig. 5: eine schematische Darstellung eines Längsschnitts durch einen Kraftwagenbug mit einem motorhaubenfesten Kühlergitter und einer Abstützung in einer ersten Ausführung,
- Fig. 6: eine schematische Darstellung eines Längsschnitts durch einen Kraftwagenbug mit einem stoßfängerfesten Kühlergitter,
- Fig. 7: eine schematische Darstellung eines Längsschnitts durch einen Kraftwagenbug mit einem stoßfängerfesten Kühlergitter und einer Abstützung in einer zweiten Ausführung,
- Fig. 8: eine schematische Draufsicht des Kraftwagenbugs gemäß Fig. 7,
- Fig. 9: eine schematische Darstellung eines Längsschnitts durch einen Kraftwagenbug mit einem stoßfängerfesten Kühlergitter und einer Abstützung in einer dritten Ausführung,
- Fig. 10: eine schematische Darstellung eines Längsschnitts durch einen Kraftwagenbug mit einem stoßfängerfesten Kühlergitter und einer Abstützung in einer vierten Ausführung,
- Fig. 11: eine schematische Darstellung eines Längsschnitts durch einen Kraftwagenbug mit einem stoßfängerfesten Kühlergitter und einer Abstützung in einer fünften Ausführung,
- Fig. 12: eine schematische Draufsicht des Kraftwagenbugs gemäß Fig. 11,
- Fig. 13: Profilquerschnitte des Zusatzelements 30 gemäß Fig. 11 sowie
- Fig. 14: eine schematische Darstellung eines Längsschnitts durch einen Kraftwagenbug mit einem stoßfängerfesten Kühlergitter und einer Abstützung in einer sechsten Ausführung

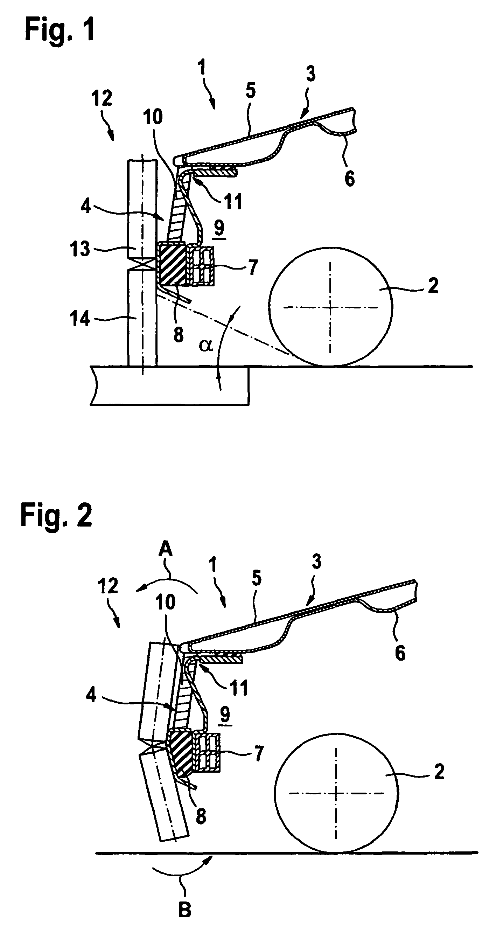

Fig. 1 und 2 zeigen einen Längsschnitt eines Kraftwagenbugs 1 mit Vorderrädern 2 in einer schematischen Darstellung. Der Kraftwagenbug 1 wird nach oben durch eine Motorhaube 3 und nach vorn durch eine Stoßfängereinheit 4 begrenzt.

Die Motorhaube 3 umfasst eine äußere Beplankung 5 und ein versteifendes Innenteil 6.

Die Stoßfängereinheit 4 umfasst einen Stoßfängerquerträger 7, dem ein Absorptionselement 8 vorgelagert ist. Oberhalb des Stoßfängerquerträgers 7 ist eine Lufteinlassöffnung 9 angeordnet, die durch ein Kühlergitter 10 abgedeckt ist.

Das Kühlergitter 10 kann entweder motorhaubenfest oder stoßfängerfest montiert sein. Unter einem motorhaubenfesten Kühlergitter wird ein Kühlergitter verstanden, das in die Motorhaube integriert ist, so dass das Kühlergitter beim Öffnen der Motorhaube mit bewegt wird. Unter einem stoßfängerfesten Kühlergitter ist ein Kühlergitter zu verstehen, dass an der Stoßfängereinheit befestigt ist, so dass das Kühlergitter seine ortsfeste Lage beim Öffnen der Motorhaube beibehält.

Unabhängig von der Art und Weise der Befestigung des Kühlergitters 10 an der Motorhaube oder an der Stoßfängereinheit ist in einem oberen Bereich des Kühlergitters 10 eine Abstützung 11 vorgesehen, die Stoßfängereinheit 4 bei einem Fußgängeraufprall in einem dem Stoßfängerquerträger 7 vorgelagerten Bereich versteift.

Diese versteifende Abstützung 11 wird in einer im Folgenden noch näher zu beschreibenden Art und Weise an einer Tragstruktur des Kraftwagenbugs 1 abgestützt.

In Fig. 1 ist ein Beinimpaktor 12 mit einem Oberschenkel 13 und einem Unterschenkel 14 in einer Position dargestellt, die einem ersten Kontakt von dem Kraftwagenbug 1 mit einem potentiellen Unfallgegner entspricht. Der Kraftwagenbug 1 kontaktiert den Beinimpaktor 12 zuerst auf Höhe des Absorptionselements 8. Im weiteren Verlauf des Aufpralls kommt es -wie in Fig. 2 dargestellt- zu einem Kontakt zwischen dem Oberschenkel 13 und der oberen Abstützung 11, so dass eine Abweisbewegung des Oberschenkels 13 in Fahrtrichtung gemäß Pfeil A erfolgt, während der Unterschenkel 14 einen Bewegungsimpuls in Pfeilrichtung B erhält. Durch diese gegenläufigen Bewegungen von Ober- und Unterschenkel kommt es zu einer Minimierung des Biegewinkels α, der sich zwischen dem Ober- und Unterschenkel aufspannt.

Anhand der folgenden Figuren werden verschiedene Möglichkeiten aufgezeigt, eine erfindungsgemäße Abstützung für einen Kraftwagenbug in Abhängigkeit des Befestigungskonzepts für das Kühlergitter vorzusehen.

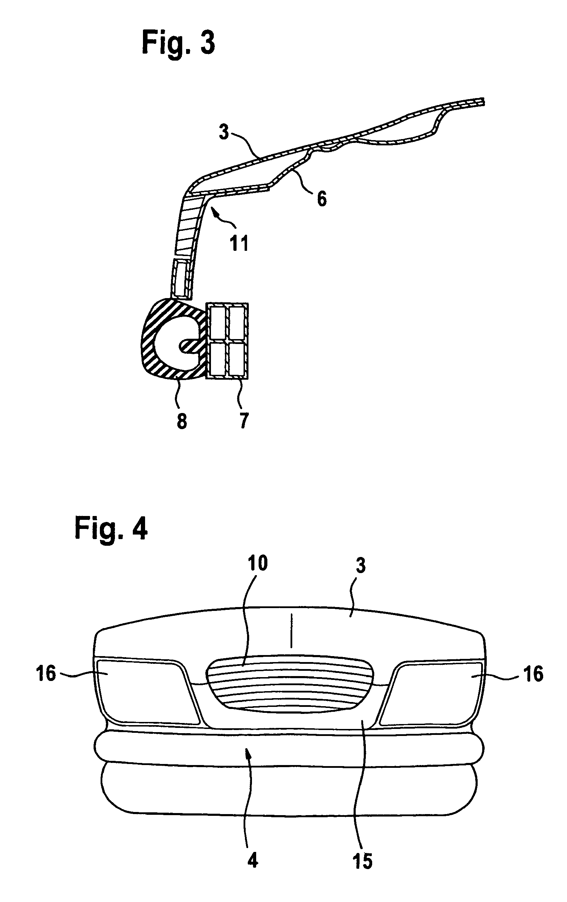

Die Fig. 3 und 4 zeigen das Prinzip eines motorhaubenfesten Kühlergitters 10, das entweder vollständig oder teilweise Motorhaubenbestandteil ist. Bei einer vollständigen Integration des Kühlergitters 10 ist die Motorhaube 3 mit einem Rahmen 15 in Richtung der Stoßfängereinheit verlängert. Rechts und links des durch den Rahmen 15 verlängerten Bereichs sind Leuchteinheiten 16 positioniert.

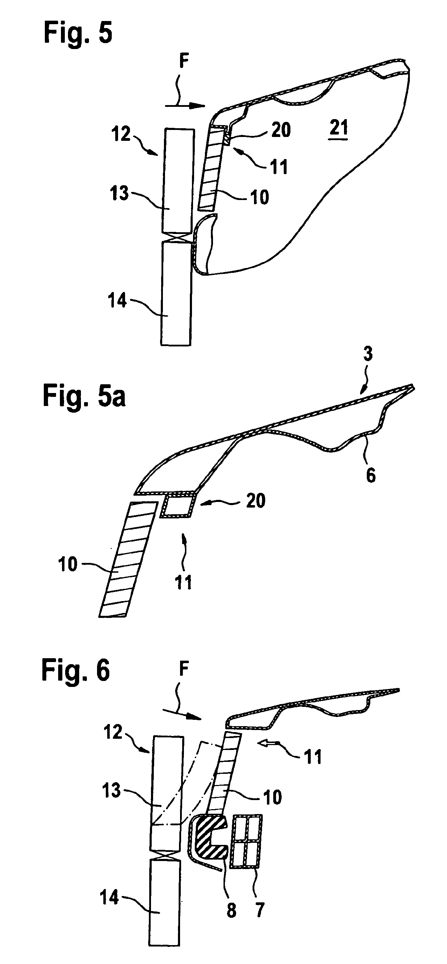

Fig. 5 zeigt eine motorhaubenfestes Kühlergitter 10, das mittels eines Anschlags 20, der von Innenteil 6 der Motorhaube 3 nach unten absteht, bei Einwirkung einer Kraft F gegen ein Verschwenken in Richtung des Motorraums 21 gesichert ist. Dieser Anschlag bildet im Zusammenwirken mit dem Kühlergitter 10 die Abstützung 11 und somit einen zweiten Lastpfad in die Tragstruktur des Kraftwagenbugs 1. Alternativ kann -wie Figur 5a zeigt- der Anschlag 2a als Zusatzteil ausgebildet sein, der am Innenteil 6 der Motorhaube 3 befestigt ist. Das Zusatzteil kann dabei aus Metall oder Kunststoff gefertigt sein.

Fig. 6 zeigt das Prinzip eines stoßfängerfesten Kühlergitters 10, das entweder direkt an der Stoßfängereinheit 4 oder wahlweise auch an anderen Tragstrukturen des Kraftwagenbugs 1 befestigt sein kann. Diese Befestigung ist herkömmlicher Art und braucht deshalb nicht näher erläutert werden.

Die Abstützung 11, hier lediglich mit einem Pfeil angedeutet, ist wie bei motorhaubenfesten Kühlergittern oberhalb des Stoßfängerquerträgers 7 angeordnet. Die über den Beinimpaktor 12 einwirkende Kraft ist mit Pfeil F dargestellt.

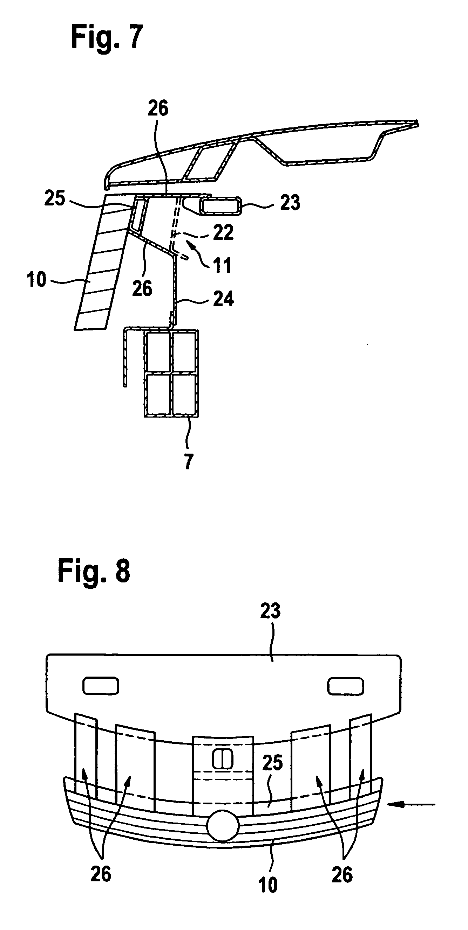

Die in Fig. 7 gezeigte zweite Ausführung der Abstützung 11 wird durch eine Verlängerung eines herkömmlichen - teilweise strichliert dargestellten- Abstandsradarträgers 22 nach vorn gebildet.

Der Abstandsradarträger 22 ist winkelförmig ausgeführt und mit seinem oberen Schenkel 23 an einer Kühlerquerbrücke 23 und mit seinem unteren Schenkel 24 an dem Stoßfängerquerträger 7 befestigt. Die Kühlerquerbrücke 23 nimmt nicht weiter dargestellten Kühlaggregate auf. Die Abstützung 11 ist als Zusatzteil ausgebildet und erstreckt sich mit einer Querstrebe 25 über nahezu die gesamte Fahrzeugbreite. Von der Querstrebe 25 stehen Laschen 26 ab, die an dem Abstandsradarträger 22 oder direkt an der Kühlerquerbrücke 23 befestigt sind. Durch die Verteilung der Laschen 26 über die Fahrzeugbreite wird eine gleichmäßige Abstützung erreicht.

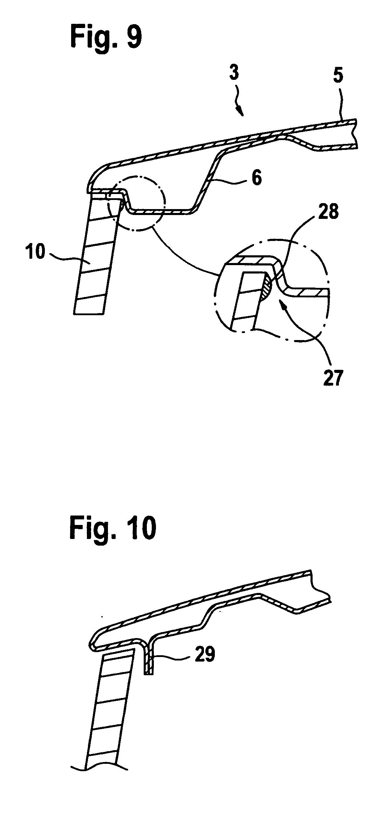

Die Fig. 9 und 10 zeigen weitere Möglichkeiten, die Abstützung 11 durch Zusammenwirken des Kühlergitters 10 mit einem durch das Haubeninnenteil 6 gebildeten Anschlags 27 entweder in Form eines geformten Profils 28 in Fig. 9 oder eines Falzes 29 in Fig. 10.

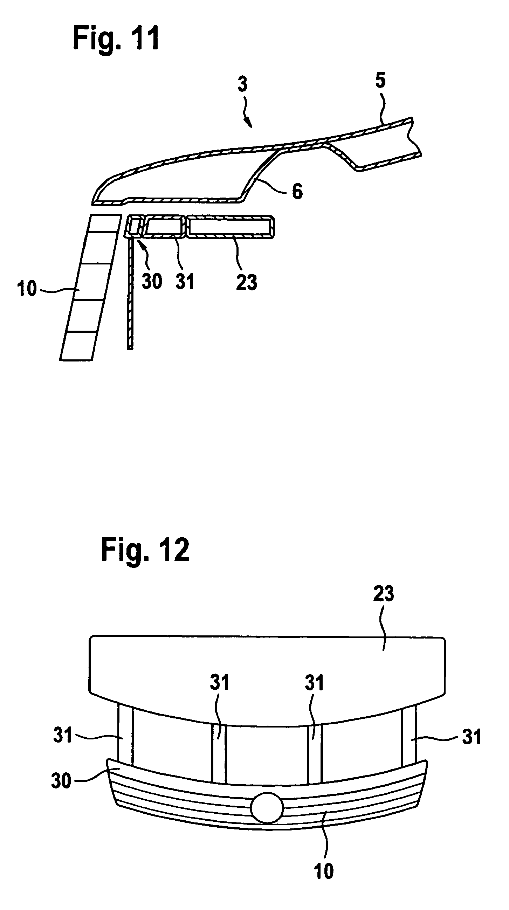

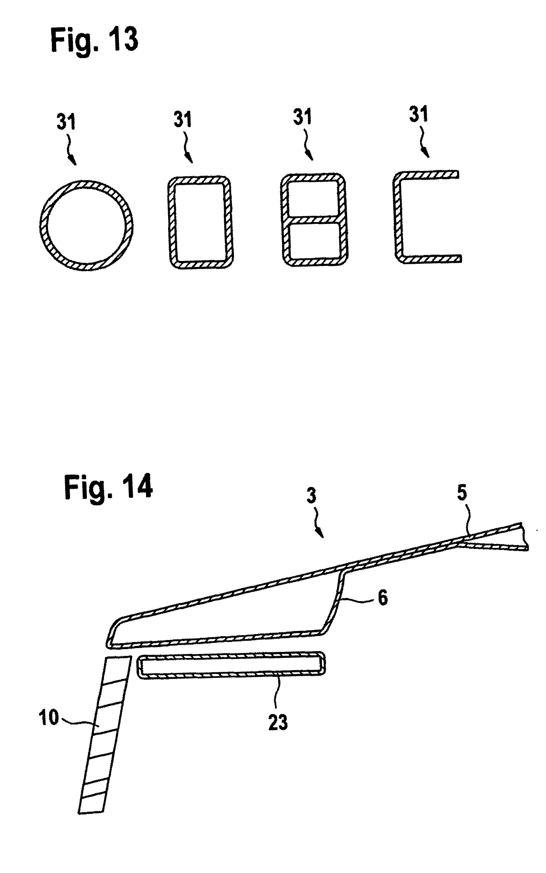

Die Fig. 11 bis 13 zeigen ein hohlprofilförmiges Zusatzelement 30, das sich über nahezu die gesamte Fahrzeugbreite erstreckt. Das Zusatzelement 30 ist durch Verbindungsstreben 31, die in Richtung der Kühlerquerbrücke 23 ausgerichtet sind, mit der Kühlerquerbrücke 23 verbunden. Das Zusatzelement 30 sowie die Verbindungsstreben 21 können wahlweise aus Metall oder Kunststoff gefertigt sein und beispielsweise Profile wie in Fig. 13 aufgezeigt aufweisen.

Wahlweise kann das Zusatzelement 30 und die Verbindungsstreben 31 einteilig als großflächiges Abstützungsteil ausgebildet sein, dass mit Verrippungen an der Ober- und oder Unterseite versehen ist, um eine entsprechende Versteifung zu erreichen.

Beim Ausführungsbeispiel gemäß Fig. 14 ist die Kühlerquerbrücke 23 derart nach vorn verlängert, das sie die Abstützung 11 für das Kühlergitter 10 bildet. Dabei kann die Kühlerquerbrücke 23 je nach Anforderung mit Versteifungen, Verstrebungen oder Profilierungen versehen sein.

## Patentansprüche

1. Kraftwagenbug mit einer Stoßfängereinheit (4), die einen Stoßfängerträger (7) umfasst, und mit einer oberhalb des Stoßfängerquerträgers (7) angeordneten Abstützung (11), die die Stoßfängereinheit (4) bei einem Fußgängeranprall versteift, wobei die Abstützung (11) die Stoßfängereinheit (4) bei einem Fußgängeranprall in einem dem Stoßfängerquerträger (7) vorgelagerten Bereich unter Bildung eines weiteren Lastpfades derart versteift, dass beim Zustandekommens eines Kontakts zwischen einem Oberschenkel (13) des anprallenden Fußgängers und der oberen Abstützung (11) im weiteren Verlauf des Anpralls eine Abweisbewegung des Oberschenkels (13) in Fahrtrichtung erfolgt, und dass die Abstützung (11) durch Zusammenwirken eines Kühlergitters (10) mit einem Anschlagmittel (20, 25, 27, 29, 30, 23) gebildet ist, um eine Auslenkung des Kühlergitters (10) entgegen der Fahrtrichtung zu verhindern.

2. Kraftwagenbug nach Anspruch 1,
**dadurch gekennzeichnet, dass**
das Anschlagmittel (20, 25, 27, 29, 30, 23) ein von der Motorhaube (3) nach unten abstehender Flansch (20, 29) ist.

3. Kraftwagenbug nach Anspruch 2,
**dadurch gekennzeichnet, dass**
das Anschlagsmittel (20, 23, 25, 27, 29, 30) als ein von der Motorhaube (3) nach unten abstehendes Zusatzelement (20) ausgebildet ist.

4. Kraftwagenbug nach Anspruch 1,
**dadurch gekennzeichnet, dass**
das Anschlagmittel (20, 25, 27, 29, 30, 23) ein vorn Innenteil (6) der Motorhaube (3) nach unten angeformtes Profil (27) ist.

5. Kraftwagenbug nach Anspruch 1,
**dadurch gekennzeichnet, dass**
das Anschlagmittel (20, 25, 27, 29, 30, 23) eine Querstrebe (25) ist, die sich über die Fahrzeugbreite erstreckt.

6. Kraftwagenbug nach Anspruch 4,
**dadurch gekennzeichnet, dass**
von der Querstrebe (25) Laschen (26) abstehen, die sich an einer Tragstruktur des Kraftwagenbugs (9) abstützen.

7. Kraftwagenbug nach Anspruch 5,
**dadurch gekennzeichnet, dass**
die Tragstruktur ein Abstandsradarträger (22) ist, der an einer Kühlerquerbrücke (23) angeschlossen ist.

8. Kraftwagenbug nach Anspruch 1,
**dadurch gekennzeichnet, dass**
das Anschlagmittel (20, 25, 27, 29, 30, 23) durch ein profiliertes Zusatzelement (30) und Verbindungsstreben (31) gebildet ist, wobei sich die Verbindungsstreben(31) an der Kühlerquerbrücke (23) abstützen.

9. Kraftwagenbug nach Anspruch 7,
**dadurch gekennzeichnet, dass**
das profilierte Zusatzelement (30) und die Verbindungsstreben (31) einteilig als großflächiges Abstützungsteil ausgebildet sind.

10. Kraftwagenbug nach Anspruch 1,
**dadurch gekennzeichnet, dass**
das Anschlagmittel (20, 25, 27, 29, 30, 23) eine nach vorn verlängerte Kühlerquerbrücke (23) ist.

## Claims

1. Motor vehicle front part with a bumper unit (4) comprising a bumper crossmember (7) and with a support (11) disposed above the bumper crossmember (7), which strengthens the bumper unit (4) at a pedestrian impact, wherein the support (11) strengthens the bumper unit (4) at a pedestrian impact in a region in front of the bumper crossmember (7) in such a way while forming a further load path that, if a contact occurs between a thigh (13) of the impacting pedestrian and the upper support, there is in the further course of the impact a deflecting movement of the thigh (13) in the direction of travel, and that the support (11) is formed by the interaction of a radiator grille (10) with a stop means (20, 25, 27, 29, 30, 23) in order to prevent a deflection of the radiator grille (10) against the direction of travel.

2. Motor vehicle front part according to claim 1,
**characterised in that**
the stop means (20, 25, 27, 29, 30, 23) is a flange (20, 29) projecting downwards from the bonnet (3).

3. Motor vehicle front part according to claim 2,
**characterised in that**
the stop means (20, 23, 25, 27, 29, 30) is designed as an auxiliary element (20) projecting downwards from the bonnet (3).

4. Motor vehicle front part according to claim 1,
**characterised in that**
the stop means (20, 25, 27, 29, 30, 23) is a profile (27) formed integrally with the interior part (6) of the bonnet (3) in a downward direction.

5. Motor vehicle front part according to claim 1,
**characterised in that**
the stop means (20, 25, 27, 29, 30, 23) is a crossmember (25) extending across the width of the vehicle.

6. Motor vehicle front part according to claim 4,
**characterised in that**
link plates (26) supported on a supporting structure of the motor vehicle front part (1) project from the crossmember (25).

7. Motor vehicle front part according to claim 5,
**characterised in that**
the supporting structure is a proximity radar support (22) connected to a radiator transverse bridge (23).

8. Motor vehicle front part according to claim 1,
**characterised in that**
the stop means (20, 25, 27, 29, 30, 23) is represented by a profiled auxiliary element (30) and by connecting struts (31), the connecting struts (31) being supported on the radiator transverse bridge (23).

9. Motor vehicle front part according to claim 7,
**characterised in that**
the profiled auxiliary element (30) and the connecting struts (31) are designed in one piece as a large-surface support part.

10. Motor vehicle front part according to claim 1,
**characterised in that**
the stop means (20, 25, 27, 29, 30, 23) is a radiator transverse bridge (23) with a front extension.

## Revendications

1. Partie avant de véhicule automobile comportant une unité (4) d'absorption des chocs, composée d'un porte pare-chocs (7), et un appui (11) disposé au-dessus de la traverse de pare-chocs (7), qui rigidifie l'unité d'absorption des chocs (4) en cas d'impact avec un piéton, ledit appui (11) qui en formant un autre chemin de charge, rigidifie l'unité pare-chocs (4) dans une zone située en amont de la traverse de pare-chocs (7) en cas d'impact avec un piéton de telle manière qu'en cas de contact de la cuisse (13) du piéton heurté et l'appui supérieur (11) un mouvement de renvoi de la cuisse (13) soit généré dans le sens de la marche au cours du choc, et que l'appui (11) soit formé par coopération d'une grille de radiateur (10) avec un moyen de butée (20, 25, 27, 29, 30, 23) pour éviter une déviation de la grille de radiateur (10) dans le sens contraire de la marche.

2. Partie avant de véhicule automobile selon la revendication 1, **caractérisée en ce que** le moyen de butée (20, 25, 27, 29, 30, 23) est une bride (20, 29) qui s'éloigne du capot (3) vers le bas.

3. Partie avant de véhicule automobile selon la revendication 2, **caractérisée en ce que** le moyen de butée (20, 25, 27, 29, 30, 23) est conçu comme un élément additionnel (20) qui s'éloigne du capot (3) vers le bas.

4. Partie avant de véhicule automobile selon la revendication 1, **caractérisée en ce que** le moyen de butée (20, 25, 27, 29, 30, 23) est un profilé (27) moulé vers le bas de la partie intérieure (6) du capot.

5. Partie avant de véhicule automobile selon la revendication 1, **caractérisée en ce que** le moyen de butée (20, 25, 27, 29, 30, 23) est une barre transversale (25) qui s'étend sur la largeur du véhicule.

6. Partie avant de véhicule automobile selon la revendication 4, **caractérisée en ce que** des pattes (26) qui s'appuient sur une structure porteuse de la partie avant (1) du véhicule moteur, s'écartent de la barre transversale (25).

7. Partie avant de véhicule automobile selon la revendication 5, **caractérisée en ce que** la structure porteuse est un support de radar de distance (22) qui est fixé sur un pont transversal de radiateur (23).

8. Partie avant de véhicule automobile selon la revendication 1, **caractérisée en ce que** le moyen de butée (20, 25, 27, 29, 30, 23) est formé par un élément additionnel (30) profilé et des éléments de liaison (31), les éléments de liaison (31) s'appuyant sur le pont transversal de radiateur (23).

9. Partie avant de véhicule automobile selon la revendication 7, **caractérisée en ce que** l'élément additionnel profilé (30) et les éléments de liaison (31) en une seule pièce sont conçus comme une partie d'appui à grande surface.

10. Partie avant de véhicule automobile selon la revendication 1, **caractérisée en ce que** le moyen de butée (20, 25, 27, 29, 30, 23) est un pont transversal de radiateur (23) qui s'étend vers l'avant.
